Europäisches Patentamt

European Patent Office

Office européen des brevets

(11) Veröffentlichungsnummer: **0 034 362**
**A2**

(12) **EUROPÄISCHE PATENTANMELDUNG**

(21) Anmeldenummer: **81101092.5**

(22) Anmeldetag: **16.02.81**

(51) Int. Cl.³: **B 23 B 5/04**

(30) Priorität: **19.02.80 DE 3006080**

(43) Veröffentlichungstag der Anmeldung:
**26.08.81 Patentblatt 81/34**

(84) Benannte Vertragsstaaten:
**BE DE FR GB IT NL SE**

(71) Anmelder: **Matra-Werke GmbH**
**Dieselstrasse 30-40**
**D-6000 Frankfurt/Main(DE)**

(72) Erfinder: **Spreng, Karl**
**Breslauer Strasse 37**
**D-6056 Heusenstamm(DE)**

(72) Erfinder: **Czapiewski, Manfred**
**Bethnal-Green-Strasse 30**
**D-6050 Offenbach(DE)**

(74) Vertreter: **Schaefer, Gerhard, Dr.**
**Linde Aktiengesellschaft Zentrale Patentabteilung**
**D-8023 Höllriegelskreuth(DE)**

(54) Bremsbelag-Abdrehmaschine.

(57) Bremsbelagabdrehmaschine mit einem umlaufenden Träger für den Drehmeissel und mit einem Elektromotor für den Antrieb und mit einer Tragvorrichtung, die durch Befestigungselemente mit einem Fahrzeugteil verbindbar ist, wobei die Tragvorrichtung aus einem Befestigungsteil (1) besteht, an dem mehrere Linearführungen (3) angeordnet sind, wobei in jeder dieser Linearführungen (3) eine Tragsäule (4) parallel zur Radachse verschiebbar gelagert ist und wobei diese Tragsäulen (4) an einem Lagertragkörper (5) befestigt sind, auf dem der umlaufende Träger (7) gelagert und bzw. oder geführt ist, an dem der oder die Drehmeissel (11) befestigt sind.

Fig. 1

# Bremsbelag-Abdrehmaschine

Die Erfindung betrifft eine Bremsbelag-Abdrehmaschine mit einem umlaufenden Träger für den Drehmeißel, einem Antriebs-Elektromotor für diesen und einer Tragvorrichtung, die durch Befestigungselemente mit einem Fahrzeugteil verbindbar ist.

Bei den bisher bekannten Bremsbelag-Abdrehmaschinen ist das Maschinengehäuse als umlaufendes Teil ausgebildet, welches entweder auf einem geschliffenen Trägerrohr drehbar gelagert ist, das am Achszapfen befestigt ist, wobei von dem Maschinengehäuse ein Auslegerarm sich annähernd parallel zur Drehachse erstreckt, der den Drehmeißel trägt oder bei einer anderen Ausgestaltungsform wird das Maschinengehäuse mit der Achsnabe verschraubt und läuft mit dieser zusammen um. Bei einigen bekannten Bremsbelag-Abdrehmaschinen läuft der Antriebsmotor mit dem Maschinengehäuse um. Das hat eine große Unwucht des umlaufenden Teiles zur Folge. Bei anderen Bremsbelag-Abdrehmaschinen wird der Antriebsmotor gegen den Boden der Werkstatt abgestützt, in der gearbeitet wird. Der Vorschub für den Drehmeißel erfolgt bei einigen bekannten Bremsbelag-Abdrehmaschinen durch eine Gewindespindel, die durch das sich drehende Maschinengehäuse auf dem genannten geschliffenen Trägerrohr axial bewegt wird. Bei anderen Bremsbelag-Abdrehmaschinen ist der Drehmeißel in einer am Maschinengehäuse angebrachten Führungsbahn geführt und der Vorschub erfolgt durch Verschieben des Drehmeißels in dieser Führungsbahn. Die umlaufenden Maschinengehäuse haben eine große umlaufende Masse.

Der Erfindung liegt die Aufgabe zugrunde, eine Bremsbelag-Abdrehmaschine zu schaffen, mit der eine bessere Bearbeitungsgenauigkeit im Rundlauf und in der Parallelität erzielt werden kann und kürzere Bearbeitungszeit erzielt werden können.

Zur Lösung dieser Aufgabe ist vorgesehen, daß die Tragvorrichtung aus einem bei Fahrzeugen mit Außenplanetengetriebe an dessen Gehäuse, bei anderen Fahrzeugen mittels eines Adapters mit einem anderen Teil des Achssystemes verbindbaren Befestigungsteil besteht, an dem mehrere Linearführungen angeordnet sind, wobei in jeder dieser Linearführungen eine Tragsäule parallel zur Radachse verschiebbar ist und wobei diese Tragsäulen an einem Lagertragkörper befestigt sind, auf dem der umlaufende Träger für mindestens einen Drehmeißel gelagert und bzw. oder geführt ist. Das heißt der umlaufende Träger kann entweder unmittelbar auf dem Lagertragkörper gelagert und geführt sein oder er kann auf den im Lagertrag-körper befestigten Enden der Tragsäulen gelagerten Wälzlagern gelagert sein und kann in diesem Falle zusätzlich durch den Lagertragkörper geführt werden. Es wird zweckmäßig sein, mindestens zwei Tragsäulen vorzusehen. Zwei Tragsäulen ergeben jedoch noch keine hinreichende Steifigkeit um die Achse, in der die Tragsäulen liegen. Mit drei Tragsäulen wird schon eine hinreichende Steifigkeit erzielt. Mehr Tragsäulen können die Führung verbessern, vergrößern aber auch den Bauaufwand. Die Tragsäulen können einfache prismatische Körper sein, beispielsweise bolzenartige Körper mit kreiszylindrischem Querschnitt oder prismatische Körper mit beispielsweise quadratischem Querschnitt. Wichtig ist, daß die Tragsäulen in den am Befestigungsteil angeordneten Linearführungen exakt geführt sind und daß das Befestigungsteil hinreichend genau derart angeordnet ist, daß die Drehachse des umlaufenden Trägers und die Achsen der Tragsäulen mit der Umlaufachse der Bremstrommel fluchten.

Bei der Bremsbelag-Abdrehmaschine gemäß der Erfindung läuft nur der umlaufende Träger für den Drehmeißel, der die Form eines Drehkranzes hat, mit dem Drehmeißel um und wird auf einer Lagerung mit großer Basis exakt geführt. Dieser drehkranzartige umlaufende Träger bzw. die Ebene, in der die Lagerstellen für diesen umlaufenden Träger angeordnet sind, befindet sich immer in der Nähe der Schnittstelle, so daß von den am Drehmeißel auftretenden Kräften kein großer Hebelarm bis zu der Kraftaufnahme an der Lagerung des umlaufenden Werkzeuges besteht. Der übrige Maschinenteil läuft nicht mit um und ist entweder an der Fahrzeugachse fest oder gegenüber dieser nur durch die Linearführungen längs verschiebbar. Dadurch wird erzielt, daß eine geringe Masse, die ringförmig ausgebildet ist, umläuft und auf einem großen Lagerdurchmesser geführt ist. Es sind geringe Unwuchtkräfte vorhanden und es können keine Taumelbewegungen auftreten. Durch die Anordnung gemäß der Erfindung kann mit größeren Schnittgeschwindigkeiten gearbeitet werden und damit kürzere Bearbeitungszeiten erzielt werden. Auch sind durch die exakte Führung geringere Antriebskräfte erforderlich und ergibt sich kompakte Konstruktion, die weder bei der Arbeit noch bei der Aufbewahrung der Maschine viel Platz beansprucht. Die umlaufenden Massen sind geringer als bei den bisher bekannten Maschinen.

Der Antriebs-Elektromotor läuft ebenfalls bei der Bremsbelag-Abdrehmaschine gemäß der Erfindung nicht mit um. Er kann am Befestigungsteil oder einer oder zwei Tragsäulen oder am Lagertragkörper befestigt sein und kann den umlaufenden Träger für den Drehmeißel mittels eines Reibrades antreiben, das auf einer Umfangsfläche des umlaufenden Trägers abwälzt. Dabei ist darauf zu achten, daß das Reibrad stets mit einer hinreichenden Anpreßkraft an der Lauffläche anliegt und daß der Elektromotor entsprechend gelagert werden muß. Andererseits ist es auch möglich, den umlaufenden Träger mit einer Verzahnung zu versehen, die mit einem Ritzel auf der Antriebs-Motorwelle kämmt.

Am umlaufenden Träger ist zweckmäßigerweise eine Einstellvorrichtung für den Drehmeißel vorgesehen mit einer radialen Führung für den Drehmeißel bzw. dessen Träger und einer Festlegevorrichtung und einer Skala, an der der Drehdurchmesser oder die Veränderung des Drehdurchmessers eingestellt werden kann.

Der Vorschub wird bewirkt, in dem der Lagertragkörper mit den Tragsäulen egenüber den Linearführungen am Befestigungsteil verschoben wird. Diese Verschiebung kann erzielt werden durch eine Spindel, die im Lagertragkörper gelagert ist und deren Gewinde in einer Mutter im Befestigungsteil geführt ist. Es ist zweckmäßig, daß diese Mutter als eine lösbare Schloßmutter gestaltet ist, damit der Lagertragkörper mit dem umlaufenden Träger schnell von Hand in die Lage verschoben werden kann, die zum Abtasten des vorhandenen Umfanges mit dem Drehmeißel oder zum Beginn des Schneidvorganges zweckmäßig ist. Die Spindel kann an ihrem Ende mit einem Zahnritzel versehen sein, das mit einer Verzahnung am umlaufenden Träger kämmt. Ist eine derartige Unstetigkeit des Vorschubes zulässig, kann das Ritzel auf ein Rad mit wenigen Zähnen bzw. Ausnehmungen, beispielsweise vier Ausnehmungen, vereinfacht werden und die Verzahnung am umlaufenden Träger auf einen einzigen Zahn reduziert werden, der zu einem Mitnahmebolzen entarten kann oder vorzugsweise zu einem Teil der Lagerung bzw. des Verbindungsbauteiles, durch das die Führung für den Drehmeißel mit dem umlaufenden Träger verbunden ist.

Die Erfindung ist im weiteren anhand des in der Zeichnung dargestellten Ausführungsbeispieles erläutert.

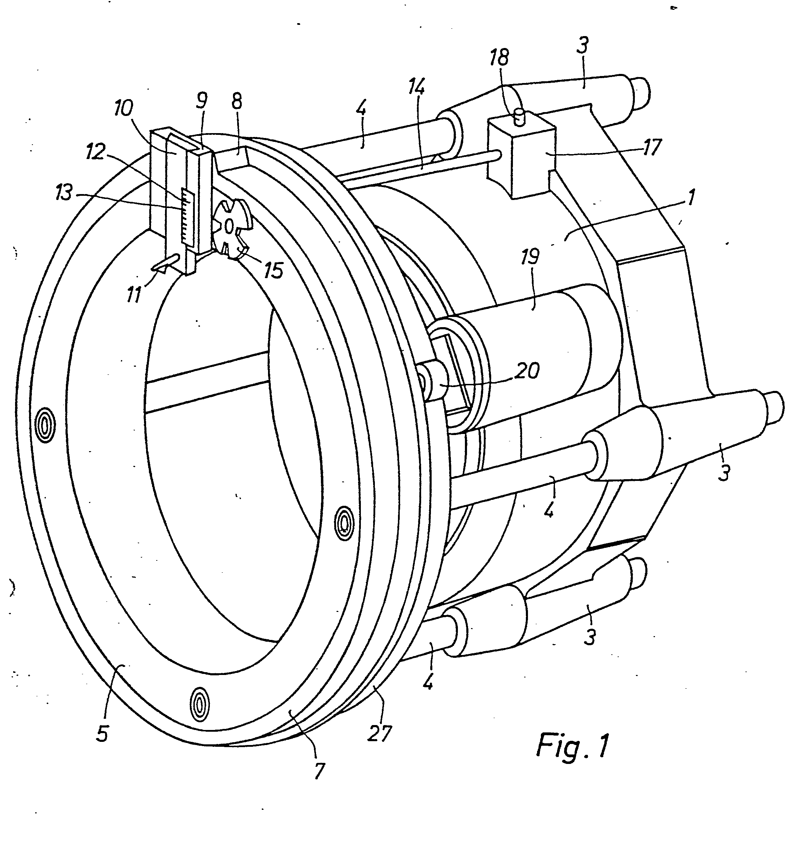

Figur 1 zeigt eine perspektivische Ansicht der Einrichtung.

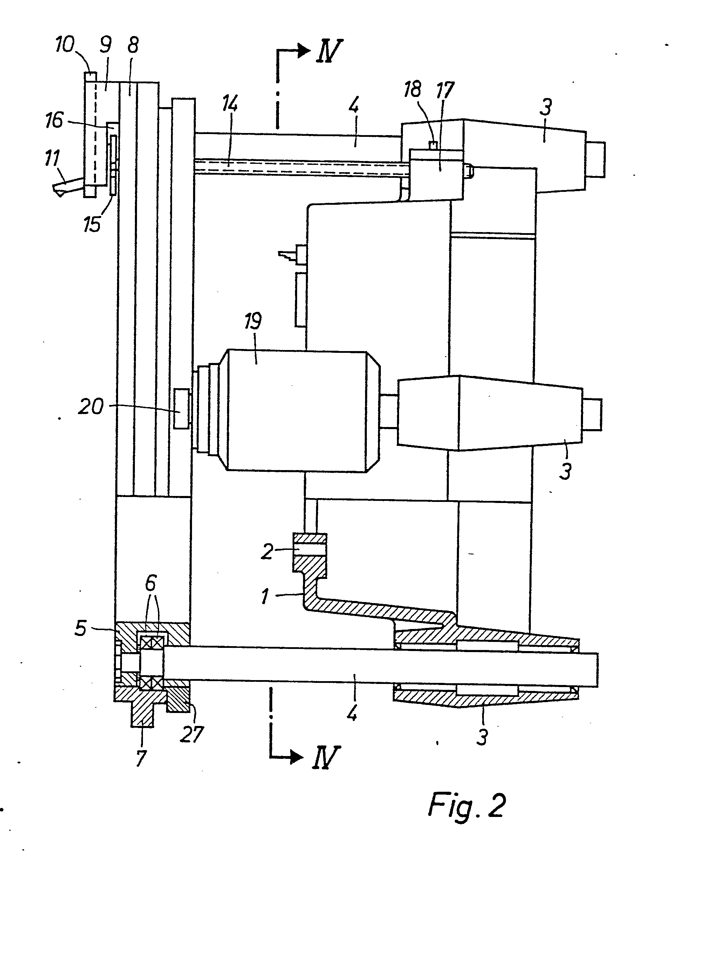

Figur 2 zeigt eine Ansicht senkrecht zur Drehachse teilweise im Axialschnitt.

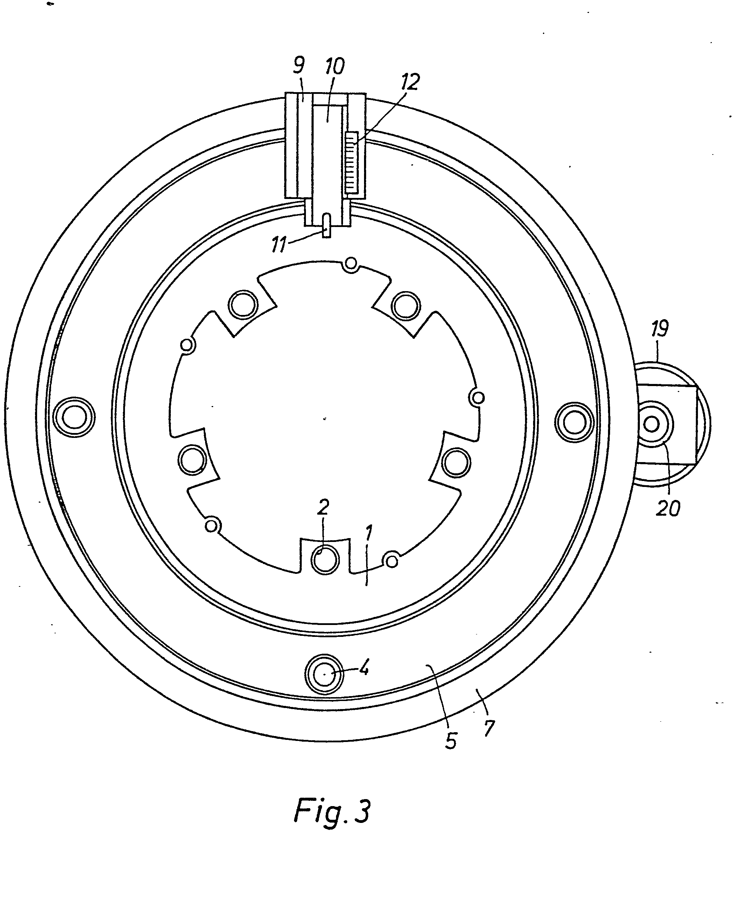

Figur 3 zeigt eine Vorderansicht in Richtung der Drehachse.

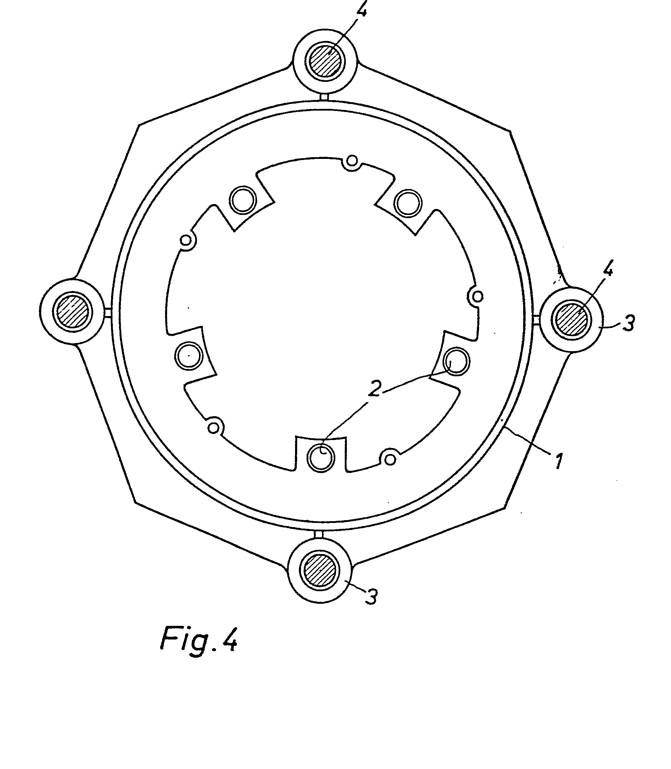

Figur 4 zeigt einen Schnitt in der Ebene IV-IV gemäß Figur 2.

Das Befestigungsteil 1 hat die Form einer Aufnahmeglocke, in deren Frontfläche Bohrungen 2 vorgesehen sind, durch die Schrauben am Planetengetriebegehäuse der Achse gesteckt werden können, so daß durch diese Schrauben das Befestigungsteil 1 gegenüber der Achse des Fahrzeuges festgelegt werden kann. Vom Fahrzeug sind in der Zeichnung keine Teile dargestellt.

Am Befestigungsteil 1 sind Linearführungen 3 vorgesehen. In jeder Linearführung 3 ist eine Tragsäule 4 in einer möglichst spielfreien Gleitlager- oder Wälzlagerführung geführt.

Auf den Enden der Tragsäulen 4 ist der Lagertragkörper 5 befestigt. Auf den davor liegenden Teilen der Enden der Tragsäulen 4 sind die Wälzlager 6 gelagert. Auf diesen ist der umlaufende Träger 7 drehbar gelagert, der mit einem Ring 27 durch eine in der Zeichnung nicht mehr dargestellte Schraubverbindung verbunden ist und zur axialen Sicherung der Lage des umlaufenden Trägers 7 auf den Wälzlagern 6 dient. Der umlaufende Träger 7 hat die Form eines Drehkranzes, der an einer Stelle einen Ausleger 8 aufweist, an dem ein Führungsteil 9 befestigt ist, in dem ein Führungsschlitten 10 geführt ist, an dem der Drehmeißel 11 befestigt ist. An dem Führungsteil 9 ist eine Skala 12 vorgesehen und an dem Führungsschlitten 10 ist eine Markierung 13 vorgesehen, die ein exaktes Einstellen des Führungsschlittens 10 und damit des Drehmeißels 11 ermöglicht. Durch in der Zeichnung nicht mehr dargestellte Klemmeinrichtungen oder sonstige Festlegeeinrichtungen ist der Führungsschlitten 10 in der Führung 9 exakt festlegbar und radial zu der Drehachse des umlaufenden Trägers 7 einstellbar. Um ein feines Einstellen zu ermöglichen, kann auch eine in der Zeichnung ebenfalls nicht dargestellte Gewindestelleinrichtung vorgesehen sein.

In dem Lagertragkörper 5 ist weiterhin eine Spindel 14 drehbar gelagert, die auf ihrem in der Zeichnung linken Ende mit einer Antriebsscheibe 15 fest verbunden ist, die vier Ausnehmungen aufweist, in die bei Vorbeilauf ein zahnartiger Vorsprung 16 an der Führung 9 eingreifen kann.

An dem Befestigungsteil 1 ist weiterhin ein Gehäuse 17 befestigt, in dem eine Schloßmutter für das Gewinde der Spindel 14 gelagert ist, die durch Betätigen des Druckknopfes 18 gelöst werden kann.

An dem Lagertragkörper 5 ist weiterhin eine Elektromotor 19 gelagert, der mittels eines Reibrades 20 den Ring 27 antreibt, der mit dem umlaufenden Träger 7 verbunden ist, so daß dieser mit angetrieben wird.

Die Wirkungsweise ist folgende: Nachdem das Befestigungsteil 1 durch durch die Bohrung 2 gesteckte Schrauben befestigt und ausgerichtet ist, wird durch Betätigen des Druckknopfes 18 die Schloßmutter gelöst, so daß die Spindel 14 leicht axial verschoben werden kann. Damit kann auch der Drehmeißel 11 leicht in die für Beginn des Bearbeitungsvorganges zweckmäßige Lage verschoben werden. Sodann wird durch Loslassen des Druckknopfes 18 die Schloßmutter um die Spindel 14 geschlossen und der Elektromotor 19 eingeschaltet, der nunmehr bewirkt, daß der umlaufende Träger 7 sich um den Lagertragkörper 5 dreht. Mit dem umlaufenden Träger 7 zusammen dreht sich der Drehmeißel 11.

Jedesmal, wenn das zahnartige Auslegerteil 16 an der Führung 9 bei der Umdrehung des umlaufenden Trägers 7 an der Achse der Spindel14 vorbeiläuft, greift das zahnartige Teil 16 in eine Ausnehmung der Scheibe 15 ein und dreht dadurch die Spindel 14 um eine Viertelumdrehung weiter. Da die Spindel 14 andererseits in der Schloßmutter geführt ist, zieht sie den Lagertragkörper 5 entsprechend ihrer Gewindesteigung ein Stück näher an das Befestigungsteil 1 heran, wobei diese Bewegung durch die Führung der Tragsäulen 4 in den Linearführungen 3 exakt geführt ist.

Form. 5729 7.78

- 1 -

<u>Patentansprüche</u>

1. Bremsbelag-Abdrehmaschine mit einem umlaufenden Träger für den Drehmeißel, einem Antriebs-Elektromotor für diesen und mit einer Tragvorrichtung, die durch Befestigungselemente mit einem Fahrzeugteil verbindbar ist, dadurch gekennzeichnet, daß die Tragvorrichtung aus einem bei Fahrzeugachsen mit Außenplanetengetriebe mit dessen Gehäuse, bei anderen Fahrzeugen mittels eines Adapters mit einem Achsteil verbindbaren Befestigungsteil (1) besteht, an dem mehrere Linearführungen (3) angeordnet sind, wobei in jeder dieser Linearführungen (3) eine Tragsäule (4) parallel zur Radachse verschiebbar gelagert ist und wobei die Tragsäule (4) an einem Lagertragkörper (5) befestigt sind, auf dem der umlaufende Träger (7) für mindestens einen Drehmeißel (11) gelagert und/oder geführt ist.

2. Bremsbelag-Abdrehmaschine nach Anspruch 1, dadurch gekennzeichnet, daß der Antriebsmotor (19) ebenfalls an dem Lagertragkörper (5) befestigt ist.

3. Bremsbelag-Abdrehmaschine nach einem der Ansprüche 1 oder 2, dadurch gekennzeichnet, daß der Antriebs-Elektromotor den umlaufenden Träger (7) mittels eines Reibradantriebes (20) antreibt.

4. Bremsbelag-Abdrehmaschine nach Anspruch 1, dadurch gekennzeichnet, daß auf dem umlaufenden Träger (7) eine Einstellvorrichtung (9, 10, 12, 13) für den Drehmeißel (11) angeordnet ist.

5. Bremsbelag-Abdrehmaschine nach Anspruch 1, dadurch gekennzeichnet, daß in dem Lagertragkörper (5) eine von dem umlaufenden Träger (7) angetriebene Spindel (14) gelagert ist, deren Gewinde in einer im Befestigungsteil (1) angeordneten Mutter geführt ist.

6. Bremsbelag-Abdrehmaschine nach Anspruch 5, dadurch gekennzeichnet, daß die Mutter eine lösbare Schloßmutter ist.

7. Bremsbelag-Abdrehmaschine nach Anspruch 1, dadurch gekennzeichnet, daß auf den im Lagertragkörper (5) festgelegten Endender Tragsäulen (4) Wälzlager (6) für die Lagerung des umlaufenden Trägers (7) angeordnet sind.

8. Bremsbelag-Abdrehmaschine nach einem der vorangegangenen Ansprüche, gekennzeichnet durch einen angetriebenen umlaufenden Träger (7), an dem der Drehmeißel (11) gelagert ist, wobei sich der Drehmeißel (11) in oder dicht bei der Ebene befindet, in der der umlaufende Träger (7) gelagert ist.

Fig. 1

*Fig. 2*

*Fig.3*

4/4

Fig.4